# FASCICULE DE BREVET EUROPEEN

(11) **EP 3 542 589 B1**
(45) Date de publication et mention de la délivrance du brevet: **15.06.2022**
(21) Numéro de dépôt: 17808549.4
(22) Date de dépôt: 13.11.2017
(51) Int. Cl.: H04W 76/14, H04W 88/04, H04W 48/20

(54) **DÉLÉGATION D'INSTRUCTIONS À UN DISPOSITIF EN FONCTION DE SES RESSOURCES**
DELEGIEREN VON ANWEISUNGEN AN EINE VORRICHTUNG IN ABHÄNGIGKEIT IHRER RESSOURCEN
DELEGATING INSTRUCTIONS TO A DEVICE DEPENDING ON ITS RESOURCES

(30) Priorité: 16.11.2016 FR 1661099
(43) Date de publication de la demande: 25.09.2019
(73) Titulaire: ORANGE, 92130 Issy-les-Moulineaux (FR)
(72) Inventeur: LE TOQUIN, Christophe, 92326 Châtillon Cedex (FR); PENHOAT, Joël, 92326 Châtillon Cedex (FR)
(86) Numéro de dépôt international: PCT/FR2017/053089
(87) Numéro de publication internationale: WO 2018/091810

(56) Documents cités:
- WO-A1-2015/167504
- US-A1- 2013 029 675
- US-A1- 2014 355 519

## Description

### 1. Domaine de l'invention

L'invention se situe dans le domaine des architectures de réseaux d'accès et des réseaux à contraintes énergétiques.

### 2. Etat de la technique antérieure

Les services proposés par les opérateurs à leurs clients s'appuient sur des réseaux construits et administrés par les opérateurs et à partir d'équipements et de logiciels mis en œuvre de façon spécifique pour la fourniture de l'ensemble de ces services. Ce constat est également vérifié avec le déploiement des architectures dites virtualisées. Ces architectures virtualisées sont notamment basées notamment sur les travaux de standardisation autour de la convergence des techniques utilisées dans les réseaux de télécommunications d'une part et les techniques du monde informatique d'autre part et sont discutées au sein du groupe NFV *(en anglais Network Function Virtualization*) de l'ETSI *(en anglais European Télécommunications Standards Institute).* Jusqu'aujourd'hui ces architectures virtualisées reposent sur des ressources virtualisées mises en œuvre par des opérateurs par exemple dans des centres de données *(en anglais Data Centers).*

Les services proposés par les opérateurs sont par ailleurs de plus en plus nombreux et de plus en plus divers. En effet, aussi bien sur les réseaux fixes que sur les réseaux mobiles, les services proposés aux clients résidentiels et professionnels s'enrichissent et requièrent de plus en plus de ressources en termes de bande passante, de mémoire, de traitement des données. La diversité des services est notamment due à l'émergence des services loT *(en anglais Internet Of Things)* caractérisés par des paramètres de flux de données spécifiques, parce qu'ils concernent un grand nombre de terminaux, mais généralement limités en terme de volume de données échangées. Ces services loT se caractérisent également par un grand nombre et une diversité assez large d'équipements loT parmi lesquels des capteurs, des récepteurs, des nouveaux équipements communicants liés à l'électroménager, aux dispositifs de contrôle, etc...

Cette augmentation des services proposés aux clients et leur plus grande diversité requièrent un déploiement de nouvelles ressources pour les opérateurs pour l'écoulement de flux de données liés à ces services. En outre, il est à noter que les nouvelles caractéristiques des flux de données peuvent requérir des ressources importantes pour l'opérateur à un endroit particulier du réseau ou pendant un temps limité, nécessitant en outre une plus grande flexibilité dans la mise à disposition et la répartition de ressources pour assurer la fourniture des services. Par exemple, l'organisation de concerts ou de compétitions sportives nécessitent des ressources autour de stades ou de salles pendant le temps que dure l'événement. Des événements se produisant dans un pays peuvent nécessiter des ressources sur l'ensemble ou une partie du territoire pendant un temps limité.

En complément aux infrastructures que les opérateurs mettent en place pour l'acheminement des données, les ressources disponibles en périphérie des infrastructures des réseaux peuvent s'avérer particulièrement intéressantes pour différentes raisons. Par périphérie des infrastructures, il faut comprendre les équipements connectés aux réseaux d'accès fixes ou mobiles des opérateurs. Ces ressources comprennent par exemple des terminaux mobiles, des équipements connectés aux réseaux domestiques ou professionnels des clients voire des équipements loT. Elles ne sont généralement pas utilisées en permanence par les clients et peuvent être disponibles pour assurer d'autres fonctions que leur fonction initiale et leur position en périphérie de réseau permet avantageusement de les utiliser lorsque des capacités sont nécessaires à leur proximité.

Mais les ressources disponibles en périphérie des infrastructures des réseaux peuvent être volatiles, c'est-à-dire qu'elles peuvent être présentes à un instant donné puis disparaître à un autre instant. A la volatilité de certaines ressources en périphérie des infrastructures des réseaux s'ajoutent pour certaines d'entre elles, i.e. les ressources mobiles, les caractéristiques des dispositifs de stockage de leur énergie. Les dimensions des dispositifs de stockage ne permettent pas un stockage d'une grande quantité d'énergie et les dispositifs disposent de réserves finies, qui peuvent s'épuiser, notamment entre deux recharges, lorsqu'il s'agit de batteries rechargeables. Cet aspect énergétique, et plus globalement des ressources, doit être pris en compte si un dispositif souhaite utiliser un autre dispositif pour effectuer des instructions.

Les inconvénients liés à l'utilisation des ressources volatiles et mobiles sont les suivants :
- Une ressource volatile peut disparaître alors même qu'elle a été sélectionnée pour traiter une requête. La qualité de service n'est alors pas stable et peut être affectée ; la qualité de service ressentie par le client utilisant ces ressources, qui peut être traduite par Qualité d'Expérience, est fortement impactée par cette volatilité.
- La quantité d'énergie stockée dans les batteries des ressources mobiles peut s'amenuiser lors du traitement d'une requête. La Qualité d'Expérience de l'émetteur de la requête et la Qualité d'Expérience du récepteur de la requête, i.e. la Qualité d'Expérience de celui qui accepte de traiter la requête, peuvent être impactées.

Le document US 2014/355519 A1 décrit une méthode visant à ce qu'un terminal mobile transmettre une requête pour le partage d'un trafic sans fil et sélectionne un autre terminal mobile pour le partage mais ne traite pas de problèmes liés à la consommation du terminal assurant le partage.

Le document WO 2015/167504 A1 décrit un procédé permettant à un premier terminal de transmettre une demande d'extension de fonctionnalité (feature) pour une fonctionnalité qu'il ne possède pas et à établir une communication avec un autre terminal pour obtenir la fonctionnalité mais ce document ne traite pas non plus des contraintes relatives aux paramètres de consommation de l'autre terminal.

Le document us 2013/029675 A1 décrit une méthode relative aux communications directes dans un système de communications sans fils mais ne vise pas à ce qu'un terminal sollicite une demande de ressources pour exécuter une tâche.

Un des buts de l'invention est de remédier à des insuffisances/inconvénients de l'état de la technique et/ou d'y apporter des améliorations.

### 3. Exposé de l'invention

Selon un premier aspect, l'invention concerne un procédé de sélection d'un dispositif, parmi une pluralité de dispositifs autonomes en énergie connectés à un réseau d'accès d'un réseau de communication et situés dans une zone géographique déterminée, aptes à exécuter des instructions relatives à la fourniture d'un service par le réseau, le procédé étant mis en œuvre par un équipement de gestion comprenant les étapes suivantes :
- Obtention d'une information, comprenant une donnée sur des paramètres de consommation, relative à des capacités de dispositifs de la pluralité,
- Réception d'un message de requête en provenance d'un terminal connecté au réseau de communication, comprenant une demande de ressources pour l'exécution des dites instructions,
- Sélection d'au moins un dispositif parmi la pluralité en fonction de l'information et de la demande de ressources,
- Envoi d'un message de sélection au terminal, comprenant un identifiant de l'au moins un dispositif sélectionné.

Selon l'art antérieur, les terminaux peuvent activer des processus en utilisant leurs ressources propres ou faire appel à des ressources localisées dans des centres de données ou au sein de ressources locaux appartenant à une clientèle résidentielle ou grand public. Ces différentes situations ne requièrent pas pour les terminaux de s'intéresser aux capacités énergétiques des ressources auxquelles ils font appel, soit parce qu'ils la connaissent dans le cas où ils utilisent leurs ressources propres, soit parce que les ressources sont alimentées en énergie par des fournisseurs d'énergie.

Les dispositifs sont autonomes en énergie s'ils disposent de ressources propres telles que des batteries d'accumulateurs qui peuvent être généralement rechargées. Lorsque les dispositifs sont sur un mode de fonctionnement utilisant ces batteries d'accumulateurs, une attention particulière à l'énergie disponible et à la consommation d'énergie doit être portée lors de la sollicitation de ces dispositifs pour l'exécution d'instructions.

Le déploiement de communications de terminal à terminal, et le recours à un autre dispositif pour mettre en œuvre des processus qu'un terminal ne peut assurer requiert de prendre en compte les capacités, notamment énergétiques de cet autre terminal. Le procédé de sélection permet de considérer les capacités, notamment en termes de ressources énergétiques ainsi qu'en termes de paramètres de consommation liés aux services et fonctions du terminal, pour déterminer un dispositif à qui déléguer des instructions qu'un terminal souhaite faire exécuter.

Les dispositifs ont des paramètres de consommation des attributs qui leur sont propres. Les attributs sont par exemple les interfaces, le client GPS (en anglais *Global Positioning System),* le niveau de luminosité de l'écran, l'activation ou non du service audio. Ces attributs peuvent varier en fonction du type de dispositif, de la marque, du système d'exploitation, voire de l'ancienneté du dispositif. La donnée sur les attributs actifs, c'est-à-dire qui sont effectivement en utilisation au moment de l'envoi du message d'état, et non actifs, susceptibles d'être sollicités par un terminal, peut être avantageusement utilisée par l'équipement de gestion pour déterminer si un dispositif est susceptible de consommer les ressources de la batterie d'accumulateurs plus rapidement qu'un autre. Cette donnée peut par exemple être utilisée en complément de l'information sur le niveau de charge de la batterie pour sélectionner un dispositif en prenant en compte le fait qu'il se décharge moins rapidement qu'un autre ayant un niveau de charge équivalent voire supérieur.

Les instructions peuvent correspondre par exemple à des fonctions de décodage, à des fonctions de transfert de flux ou bien des fonctions de commande. Ce procédé nécessite d'une part de recevoir une demande de ressources, émise par un terminal (téléphone mobile, ordinateur, capteur...), nécessaires à la mise en œuvre des instructions et d'autre part de recueillir des informations sur les capacités des différents dispositifs susceptibles de pouvoir mettre en œuvre les instructions et enfin de pouvoir sélectionner un des dispositifs en fonction de ces différentes informations collectées. Le procédé est mis en œuvre dans un équipement de gestion en interaction avec le terminal et les dispositifs.

Les dispositifs susceptibles de pouvoir mettre en œuvre les instructions doivent se trouver à portée de communication directe du terminal. En d'autres termes, le terminal et le dispositif sélectionné doivent pouvoir communiquer par exemple en utilisant une communication sans fil de type Wi-Fi ou Bluetooth ou bien en utilisant un lien filaire par exemple de type Ethernet. Par conséquent, l'équipement de gestion auquel il est fait appel peut gérer une zone géographique dans laquelle il sélectionne un dispositif ou bien il peut gérer plusieurs zones, le choix de la zone géographique ou des zones au sein desquelles il cherche un dispositif pouvant être spécifique à son mode de fonctionnement. L'équipement de gestion peut au préalable définir la zone de recherche via des outils d'administration de réseau notamment.

Si un dispositif est en capacité de mettre en œuvre l'instruction, et que ce dispositif a été sélectionné par l'équipement de gestion, celui-ci transmet l'information sur le dispositif sélectionné au terminal afin que ce dernier puisse solliciter directement le dispositif sélectionné pour lui transférer ou lui indiquer les instructions à accomplir. Le transfert entre le terminal et le dispositif ou la sollicitation du dispositif par le terminal pourra s'opérer via un protocole de type client-serveur ou un protocole utilisé pour les services M2M (en anglais *Machine To Machine).*

Selon une caractéristique particulière, l'information relative à des capacités de dispositifs comprend une donnée relative à la quantité d'énergie disponible.

La quantité d'énergie disponible dans le dispositif est un critère important pour le choix du dispositif sélectionné pour assurer l'exécution des instructions. Cette quantité d'énergie renseigne en effet sur la durée d'autonomie ainsi que sur la capacité à assurer certaines instructions, plus ou moins gourmandes en énergie.

Dans le cas où l'autonomie en énergie est due à l'utilisation de batteries d'accumulateurs, le niveau de charge de ces batteries représente une donnée importante pour la sélection du dispositif en charge d'assurer la mise en œuvre d'une instruction d'un terminal. Cette donnée est le plus souvent disponible directement sur le dispositif notamment s'il s'agit d'un téléphone portable voire sur un équipement d'un réseau local domestique ou d'entreprise. Cette donnée peut être représentée sous la forme d'un pourcentage de charge complète. L'équipement de gestion, à partir des différents taux de charge reçus, peut sélectionner le dispositif ayant le taux de charge le plus élevé, d'une part pour garantir au terminal une plus grande disponibilité du dispositif et d'autre part, comme moyen de moins impacter un dispositif ayant peu de ressources énergétiques disponibles.

Selon une caractéristique particulière, la demande de ressources inclut des paramètres définissant un service de communication.

La détermination d'un dispositif par l'équipement de gestion dépend des informations collectées sur les dispositifs mais également du niveau de ressources ainsi que du type de ressources liées au service de communication à activer. Le service de communication à mettre en œuvre sur un dispositif peut requérir uniquement un service audio, dans le cas par exemple d'un service de mise en relation téléphonique, ou bien un service audio et vidéo, dans le cas par exemple d'un service de streaming. Ces services de communication n'ont pas le même profil de consommation énergétique et des ressources plus importante sont nécessaires pour le service de streaming que pour le service audio.

Selon une caractéristique particulière, le message de requête comprend en outre une information relative à la localisation du terminal.

Le procédé de sélection étant valide pour un domaine géographique prédéfini, l'information transmise par le terminal sur sa propre localisation est avantageusement pris en compte pour la détermination des dispositifs. Par exemple si cette information de localisation est représentée par des coordonnées GPS, voire par des informations liées à l'adressage IP du terminal, l'équipement de gestion est en mesure de ne considérer que des dispositifs situés dans un domaine défini par rapport à la localisation du terminal.

Selon une caractéristique particulière, au moins deux dispositifs sont sélectionnés pour exécuter les instructions.

Un seul dispositif peut ne pas être en mesure de mettre en œuvre l'ensemble des instructions requises par un terminal et pour lesquelles un équipement de gestion est sollicité. Dans le cas où il est possible de répartir les instructions sur au moins deux dispositifs, l'équipement de gestion, à partir de l'information et de la demande de ressources reçues, peut sélectionner deux ou plus de deux dispositifs et en informer le terminal qui sollicite ensuite les dispositifs indiqués pour qu'ils exécutent les instructions. L'information transmise par l'équipement de gestion au terminal pour lui indiquer les dispositifs sélectionnés peut également indiquer les instructions respectives à faire exécuter par chaque dispositif sélectionné ou il peut laisser le terminal décider des instructions à faire exécuter par les dispositifs respectifs.

Selon une caractéristique particulière, le procédé de sélection comprend en outre une étape d'obtention d'une information relative à la localisation des dispositifs de la pluralité.

Le terminal communique avec le dispositif une fois que celui-ci a été déterminé par l'équipement de gestion. Cette communication est possiblement établie au niveau liaison de données, également identifiée comme le niveau 2 dans l'architecture OSI (en anglais *Open Systems Interconnection*)*,* notamment parce que le dispositif et le terminal sont proches géographiquement. L'information sur la localisation du dispositif peut s'avérer pertinente dans la procédure de détermination réalisée par l'équipement de gestion car elle peut être mise à profit pour sélectionner un dispositif se trouvant à proximité, notamment si l'équipement de gestion a connaissance de la localisation du terminal souhaitant faire exécuter des instructions à un dispositif. Cette information peut correspondre à des données de localisation GPS (en anglais *Global Positioning System),* des données liées à un rattachement à un réseau d'accès, une adresse IP (en anglais *Internet Protocol*)*.*

Selon une caractéristique particulière, le procédé comprend en outre une étape de réception d'un message comprenant une information relative à des interfaces actives des dispositifs de la pluralité.

Sachant que les communications entre le terminal et l'au moins un dispositif sélectionné sont probablement établies via des interfaces Wi-Fi et Bluetooth et de façon ad'hoc, c'est-à-dire sans forcément faire intervenir un opérateur de réseau de communications, l'information sur les interfaces actives des dispositifs peut être avantageusement utilisée. En effet, l'entité de gestion peut en priorité choisir les dispositifs ayant une interface active permettant des débits plus importants ou permettant de garantir une perte de paquets minimale. Chaque dispositif peut ainsi transmettre à l'entité de gestion les interfaces réseaux actives, comme par exemple les interfaces Wi-Fi, Bluetooth, 6lowpan (en anglais *IPv6 Low Power Wireless Personal Area Networks),* de telle façon que l'entité de gestion intègre cette information dans ses critères de sélection d'un dispositif.

Selon une caractéristique particulière, le message de sélection comprend en outre une information relative à une connectivité du dispositif sélectionné.

Le terminal, à la réception du message de sélection, contacte le dispositif pour qu'il exécute les instructions qui lui sont soumises. Le terminal, afin de pouvoir communiquer directement avec le dispositif, doit posséder une information lui permettant de le joindre. Dans le cas où le terminal ne dispose pas de cette information, l'équipement de gestion peut lui envoyer une information telle que l'adresse IP, une adresse MAC (en anglais *Medium Access Control*) ou bien une information de type FQDN (en anglais *Fully Qualified Domain Name).*

Selon un deuxième aspect, le procédé concerne également un équipement de gestion, mettant en œuvre le procédé de sélection d'un dispositif autonome en énergie, parmi une pluralité de dispositifs connectés à un réseau d'accès d'un réseau de communication et situés dans une zone géographique déterminée, dans le but d'exécuter des instructions relatives à la fourniture d'un service par le réseau comprenant :
- Un module d'obtention d'une information, comprenant une donnée sur des paramètres de consommation, relative à des capacités de dispositifs de la pluralité,
- Un récepteur agencé pour recevoir un message de requête en provenance d'un terminal connecté au réseau de communication, comprenant une demande de ressources pour l'exécution des dites instructions,
- Un module de sélection agencé pour sélectionner au moins un dispositif parmi la pluralité en fonction de l'information et de la demande de ressources,
- Un émetteur agencé pour émettre un message de sélection au terminal, comprenant un identifiant de l'au moins un dispositif sélectionné,
- Une base de données agencée pour sauvegarder l'information.

Selon une caractéristique particulière, le récepteur de l'équipement de gestion est également agencé pour recevoir une information relative à la localisation des dispositifs de la pluralité.

Selon un autre aspect, le procédé concerne également un programme de sélection, caractérisé en ce qu'il comprend les instructions pour la mise en œuvre des étapes du procédé de sélection, lorsque ledit programme est exécuté par un processeur et un support d'enregistrement lisible par un équipement de gestion sur lequel est enregistré le programme.

Le programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de sélection en question.

### 4. Description détaillée d'au moins un mode de réalisation de l'invention

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
La **figure 1** présente de façon schématique une architecture de réseau de communication et les sources d'énergie des équipements, selon l'art antérieur.
La **figure 2** présente une vue logique d'une architecture dans laquelle un procédé de sélection d'un dispositif est mis en œuvre selon un aspect de l'invention.
La **figure 3** décrit un exemple de mise en œuvre des différentes étapes du procédé de sélection d'un dispositif selon un mode de réalisation de l'invention.
La **figure 4** représente un exemple de structure d'une entité de gestion apte à mettre en œuvre le procédé de sélection selon l'invention.

### Description détaillée d'au moins un mode de réalisation de l'invention

Dans la suite de la description, va être décrit un mode de réalisation du procédé de sélection d'un dispositif, parmi une pluralité de dispositifs autonomes en énergie selon l'invention.

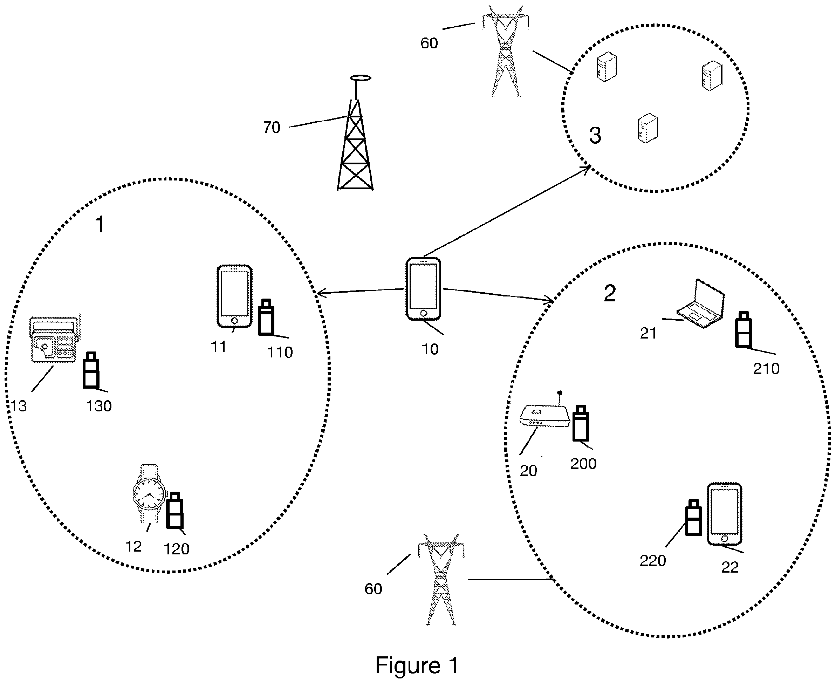

On se réfère tout d'abord à la **figure 1** qui présente de façon schématique, selon l'art antérieur, une architecture de réseau de communication et les sources d'énergie des équipements. Le terminal 10 est connecté à un réseau d'accès 70 de type cellulaire, par exemple basé sur la norme 3GPP (en anglais *3rd Génération Partnership Project)* de deuxième, troisième, quatrième génération ou d'une génération suivante. Le terminal 10 peut être un téléphone mobile ou tout autre équipement en mesure de se connecter à un réseau d'accès (ordinateur portable, capteur, montre...) et le réseau d'accès peut également être basé sur des normes IEEE (en anglais *Institute of Electrical and Electronics Engineers)* ou 3GPP2 (en anglais *3rd Génération Partnership Project 2)* ou toute autre norme permettant de mettre en œuvre des réseaux d'accès.

Dans le cas où le terminal 10 souhaite faire exécuter des instructions liées au traitement des données, à la modification des données, à l'émission ou la réception de données, il a la possibilité de solliciter différents types d'équipements. Il peut solliciter des équipements centralisés dans un centre de données 3. Le centre de données étant centralisé, donc probablement éloigné du terminal 10, celui-ci utilise dans ce cas sa connexion au réseau d'accès 70 ou à un autre réseau d'accès s'il est également connecté par exemple en Wi-Fi à un point d'accès public. Dans ce cas, les ressources du centre de données sont éloignées et nécessitent pour le terminal 10 d'avoir une connexion à un réseau d'accès mais les contraintes de disponibilité et de manque de ressources énergétiques ne se posent pas. Ces centres de données sont en effet alimentés en énergie par un fournisseur d'électricité qui, en outre, assure une disponibilité de l'énergie d'autant plus importante qu'il s'agit de centre de données névralgiques, c'est-à-dire qui doivent être opérationnels en permanence.

Le terminal 10 a également la possibilité de solliciter un réseau 2 à proximité de sa situation géographique, tel qu'un réseau local résidentiel ou professionnel. Ces réseaux permettent généralement à un terminal « invité » de se connecter au réseau notamment si le terminal 10 et le réseau local 2 sont clients d'un même fournisseur de services ou de fournisseurs de services ayant un accord entre eux. Le terminal 10 peut ainsi accéder au réseau local 2, et utiliser des ressources de ce réseau, en se connectant à un réseau Wi-Fi diffusé par un équipement d'accès du réseau local, si besoin en utilisant une clé de sécurité et ce, sans forcément être client du même fournisseur. Comme pour le cas du centre de données centralisé, le problème de ressources énergétiques ne se posent pas à condition que le dispositif du réseau local dont le terminal 10 utilise les ressources ne soit pas autonome énergétiquement. Sur la figure 1, le réseau local 2 est alimenté par le réseau électrique 60 mais les dispositifs 20, 21, 22 du réseau local 2 peuvent également dans certains cas être autonomes énergétiquement, s'ils sont déconnectés du réseau électrique 60 ou si le réseau électrique n'est pas opérationnel et n'alimente pas en électricité le réseau local 2. La criticité due au manque de ressources des dispositifs 20, 21, 22 du réseau local 2 est bien réelle, en fonction notamment de la charge des batteries d'accumulateurs, appelées batteries dans la suite du texte, respectives 200, 210, 220 des dispositifs 20, 21, 22.

Le terminal 10 peut également solliciter des dispositifs 11, 12, 13 de la zone géographique 1. Par rapport aux deux options précédentes, les dispositifs 11, 12, 13 présents dans la zone 1 n'ont pas forcément de connexions les uns avec les autres mais partagent la caractéristique de se trouver dans une zone située à proximité du terminal 10. Ceci permet à ce dernier de communiquer avec les dispositifs 11, 12, 13 sans requérir à une connexion au réseau d'accès 70. Ces dispositifs 11, 12, 13 sont connectés à un réseau d'accès d'un réseau de communication, qui peut être différent du réseau d'accès 70, et peuvent être sollicités par le terminal 10 car ils se trouvent dans une zone géographique permettant de garantir une qualité de service suffisamment satisfaisante. Le terminal peut communiquer avec l'un de ces dispositifs, s'il utilise des ressources de l'un de ces dispositifs, en utilisant une connexion directe, par exemple basé sur un protocole M2M *(en anglais Machine to Machine),* ne nécessitant pas nécessairement d'infrastructure d'opérateur. Lorsque le terminal 10 sollicite un des dispositifs 11, 12, 13 pour effectuer des instructions, les ressources notamment énergétiques dont ces dispositifs disposent pour satisfaire les besoins du terminal 10 sont particulièrement importantes à considérer dans la procédure de choix du dispositif.

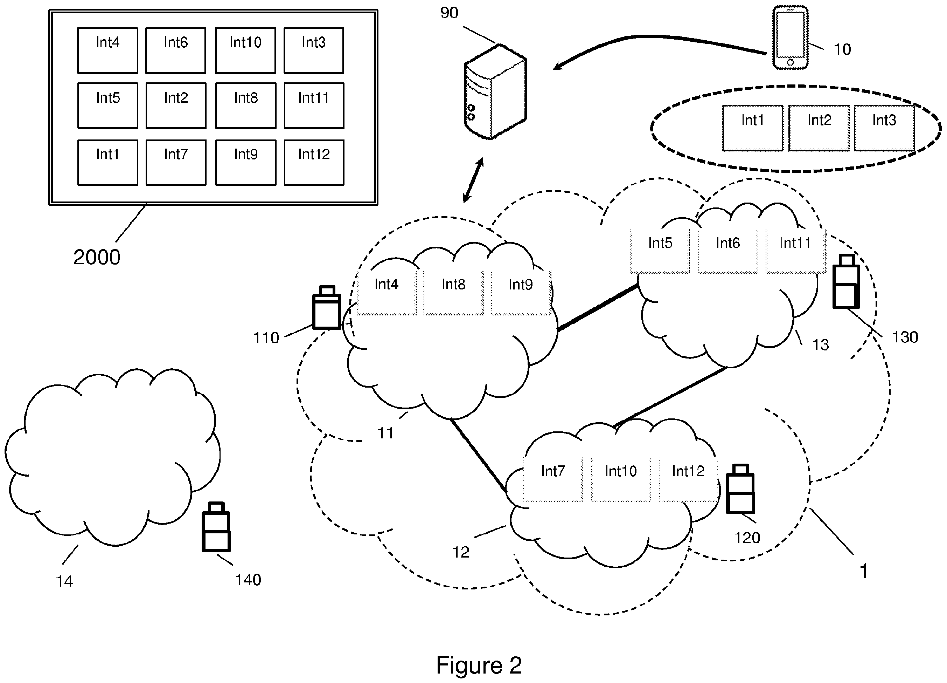

On se réfère maintenant à la **figure** 2 qui présente une vue logique d'une architecture dans laquelle un procédé de sélection d'un dispositif est mis en œuvre selon un aspect de l'invention. Dans cette figure, est représenté un terminal 10 qui souhaite faire exécuter un ensemble d'instructions Int1, Int2, Int3 à des dispositifs du réseau. Quatre dispositifs sont représentés sur la figure pour exécuter ces instructions. Trois dispositifs 11, 12, 13 font partie d'une zone géographique 1 au sein de laquelle des dispositifs peuvent potentiellement exécuter les instructions. Le dispositif 14 ne fait pas partie de la zone 1 et ne peut donc être sélectionné. La zone géographique, au sein de laquelle les dispositifs peuvent effectivement être sélectionnés, est définie initialement par l'entité 90 en charge de la sélection ou bien par une autre entité qui communique cette zone à l'entité 90. Des outils mesurant la qualité de service des différents dispositifs peuvent être avantageusement utilisés pour intégrer ou non ces dispositifs à une zone correspondant à un niveau de qualité de service requis. Un autre mode de réalisation peut consister à s'appuyer sur les coordonnées géographiques, par exemple issu de données GPS, pour définir la zone géographique. L'entité de gestion 90 sélectionne le ou les dispositifs assurant l'exécution des instructions Int1, Int2, Int3 parmi les dispositifs 11, 12, 12 ayant respectivement des batteries d'accumulateurs 110, 120, 130 dont le niveau de charge est représenté par la hauteur du rectangle noir. Le terminal 10 sollicite l'entité de gestion 90 pour faire exécuter les instructions Int1, Int2, Int3 par des dispositifs. Le terminal connaît l'entité de gestion suite à une configuration manuelle ou automatique, par exemple via une communication avec une entité d'administration. Il peut également obtenir l'information sur l'entité de gestion 90 via un protocole de configuration de type DHCP *(en anglais Dynamic Host configuration Protocol*) ou SNMP *(en anglais Simple Network Management Protocol*)*.* L'entité de gestion 90 dispose d'une base de données 2000 dans laquelle il enregistre notamment les demandes d'exécutions d'instructions des terminaux. Sur la figure 2, la base de données comprend les instructions Int4, Int5, Int6,....,Int12 qui sont des instructions à exécuter requises par le terminal 10 ou par d'autres terminaux ayant sollicité l'entité de gestion 90. A ces instructions, s'ajoutent donc les instructions Int1, Int2, Int3 à faire exécuter par un ou plusieurs dispositifs de la zone 1. L'entité de gestion 90 peut détenir une base de données par zone géographique ou bien une base de données pour l'ensemble des zones géographiques qu'elle gère. Dans le cas d'une base unique, l'entité de gestion 90 a un moyen d'indexer les instructions par zone gérée. Dans la figure 2, on considère que la base de données 2000 correspond à la zone géographique 1. Les instructions Int4, Int8, Int 9 sont exécutées par le dispositif 11, les instructions Int5, Int6, Int11 sont exécutées par le dispositif 13 et les instructions Int7, Int10, Int12 sont exécutées par le dispositif 12. L'entité de gestion doit faire exécuter, si possible, les instructions Int1, Int2, Int3 par un de ces trois dispositifs appartenant à la zone 1. Le nombre de dispositifs par zone n'est à priori pas limité, et selon le paramètre retenu pour la définition de la zone, de nouveaux dispositifs peuvent être intégrés à la zone géographique. Des dispositifs peuvent également la quitter. L'entité de gestion 90 peut être spécifiquement déployée pour mettre en œuvre le procédé de sélection. Dans ce cas, elle ne réalise que cette fonction. Le procédé de sélection peut également mis en œuvre dans une entité assurant d'autres fonctions. Par exemple, il peut s'agir d'une entité d'administration des réseaux. Cette fonction peut également être instanciée sous la forme d'une fonction virtualisée, c'est-à-dire sous une forme logicielle déployée sur un équipement matériel non spécifique à la fonction réalisée, ici le procédé de sélection.

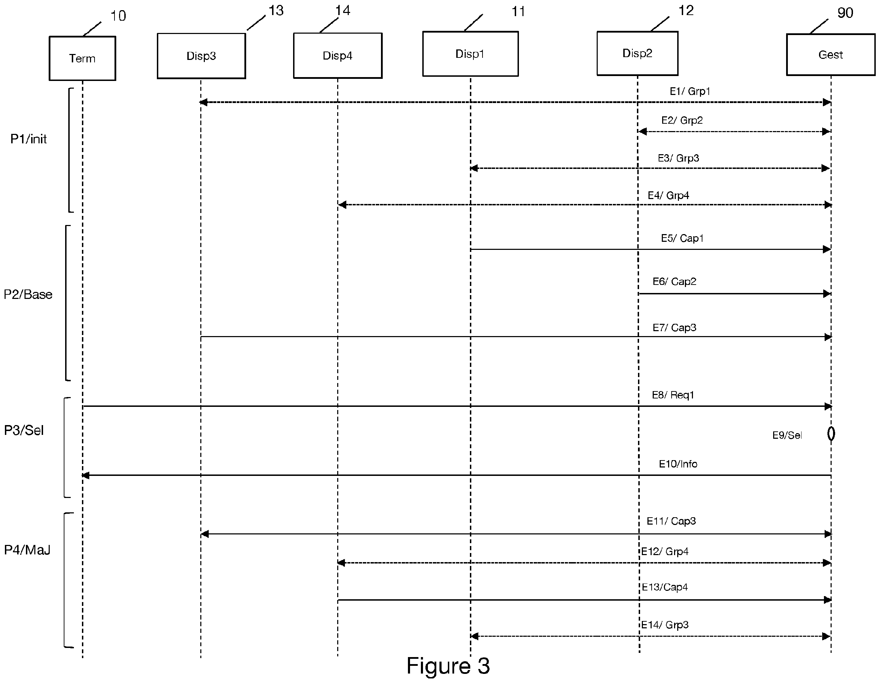

On se réfère maintenant à la **figure** 3 qui présente les différentes étapes du procédé de sélection d'un dispositif selon un mode de réalisation de l'invention. Le processus de sélection est structuré en 4 phases. Une première phase P1 comprenant les étapes E1 à E4 qui est une phase d'initialisation correspondant à la constitution du domaine géographique. La deuxième phase P2 comprenant les étapes E5 à E7 au cours de laquelle l'entité de gestion 90 constitue sa base de données. La troisième phase P3, qui comprend les étapes E8 à E10, est la phase au cours de laquelle est effectuée la sélection effective d'un ou plusieurs dispositifs. La phase P4, comprenant les étapes E11 à E14 est une phase de mise à jour des informations utiles au procédé de sélection.

Lors de la phase P1, les différents dispositifs 11, 12, 13, 14 envoient à l'entité de gestion 90 une information permettant à celle-ci de pouvoir définir une zone géographique au sein de laquelle elle sélectionne des dispositifs. Lors de cette phase P1, le processus Init d'initialisation est réalisé à partir d'échanges entre chaque dispositif et l'entité de gestion. Le dispositif 13 communique un message Grp1 lors de l'étape E1. Ce message peut consister à envoyer des coordonnées GPS, à envoyer des informations de qualité de service ou bien d'indiquer des paramètres de connectivité tels qu'une adresse IP *(en anglais Internet Protocol*) au dispositif de gestion 90. Un autre mode de réalisation peut consister à ce que l'entité de gestion 90 sollicite les différents dispositifs par exemple pour connaître leur qualité de service. Il peut utiliser un outil spécifique pour qualifier les dispositifs en terme de qualité de service ou bien par exemple envoyer un message de type ICMP *(en anglais Internet Control Message Protocol*) aux différents dispositifs. Les dispositifs peuvent avoir connaissance de l'entité de gestion par configuration manuelle ou automatique, ou bien en ayant obtenu l'information sur cette entité de gestion lors de leur configuration via le protocole DHCP ou SNMP par exemple. Dans le cas où l'entité de gestion 90 sollicite les dispositifs, il peut solliciter les dispositifs se situant dans un domaine de diffusion broadcast ou multicast, par exemple en utilisant une adresse multicast propre à cette découverte. L'entité de gestion 90 communique avec chaque dispositif 11, 12, 13, 14 dans les étapes respectives E1, E2, E3, E4 où, à partir des messages Grp1, Grp2, Grp3, Grp4, l'entité de gestion constitue la zone géographique au sein de laquelle elle sélectionne un ou plusieurs dispositifs pour exécuter des instructions requises par un terminal. Lors de cette première phase P1, l'entité de gestion 90 retient 3 dispositifs 11, 12, 13 dans la zone géographique de sélection. Le dispositif 14 n'est pas retenu car il est trop éloigné ou parce qu'il ne présente pas une qualité de service suffisante pour être intégré à la zone géographique, selon le mode retenu pour l'appartenance à la zone.

Lors de phase P2, chaque dispositif de la zone fait part de ses capacités en envoyant un message d'information à l'entité de gestion 90. Selon un mode de réalisation particulier, les dispositifs peuvent transmettre à l'entité de gestion une donnée sur la quantité d'énergie disponible, correspondant par exemple à un niveau de charge des batteries. Chaque dispositif indique son niveau de charge à l'entité de gestion. Dans un autre mode de réalisation, les dispositifs transmettent des données sur les paramètres de consommation des dispositifs. En effet, le niveau de charge de la batterie peut être une donnée intéressante mais pas suffisante pour que l'entité de gestion 90 fasse le meilleur choix. Un premier dispositif peut avoir une meilleure charge qu'un second dispositif mais, pour autant, il peut être plus intéressant de sélectionner le second dispositif car il a de meilleurs paramètres de consommation. Les dispositifs, dans ce mode de réalisation, fournissent par exemple les paramètres de consommation liés à l'état dans lequel se trouvent les dispositifs. Si sur le dispositif 11, le GPS est activé, le niveau de luminosité est « *y* », le Wi-Fi est activé, et le système audio est activé, il transmet au cours de l'étape E5 les caractéristiques de consommation liés au GPS, au Wi-Fi, au système audio et au niveau de luminosité « y » ainsi que le paramètre de consommation du CPU *(en anglais Central Processing Unit).* Un autre dispositif, 12 transmet au cours de l'étape E6 les paramètres liés à l'activation de son GPS, de son système vidéo, de son système vidéo et de sa consommation CPU dans le cas où seuls ces services sont activés. Le niveau de charge de la batterie et les paramètres de consommation peuvent également être transmis conjointement à l'entité de gestion 90. Chaque dispositif 11, 12, 13 de la zone géographique transmet une information relative à ses capacités dans les messages respectifs Cap1, Cap2, Cap3 transmis lors des étapes E5, E6, E7. Lorsque les paramètres évoluent, par exemple si un service est activé ou désactivé sur le dispositif, ou à intervalle de temps régulier s'il s'agit de niveau de charge, les dispositifs 11, 12, 13 peuvent émettre de nouveaux messages pour indiquer à l'entité de gestion 90, les nouvelles informations à prendre en compte.

La phase à proprement dit de sélection, P3, est ensuite initiée. Cette phase P3 est susceptible de se produire à n'importe quel moment, puisqu'elle est initiée lorsqu'un terminal, qui peut être un terminal mobile, un ordinateur, un équipement de réseau, souhaite faire exécuter des instructions par un dispositif du réseau. Ceci explique pourquoi l'entité de gestion doit détenir des informations à jour sur les zones géographiques et sur les capacités des dispositifs, conformément aux étapes des phases P1 et P2 décrites précédemment. Si la phase P3 intervient alors que l'entité de gestion ne possède pas toutes les informations sur les dispositifs lui permettant de sélectionner un dispositif, il peut déclencher l'une des deux ou les deux phases P1 et P2. Ceci peut survenir notamment lors d'un redémarrage de l'entité de gestion 90 après une interruption intempestive, n'ayant pas permis de sauvegarder la base de données. Afin d'éviter ce type de problème, un mode de réalisation basé sur au moins deux entités de gestion, par exemple déployés en mode grappe *(en anglais cluster),* partageant les mêmes informations et garantissant une haute disponibilité est recommandé.

Le démarrage de la phase P3 intervient lorsque le terminal 10 émet, lors de l'étape E8, une requête vers l'entité de gestion 90 pour faire exécuter des instructions. Cette demande consiste pour le terminal 10 à demander à l'entité de gestion 90 des ressources pour la fourniture d'un service par le réseau pouvant consister à un service de traitement (codage, décodage, application d'une politique spécifique de traitement...), à un service de transmission par exemple pour l'envoi à un serveur en particulier ou à une combinaison de services de traitement et de transmission. Tout autre service requérant des ressources est considéré comme pouvant bénéficier du service de sélection. Dans un mode de réalisation, la demande de ressources émise par le terminal 10 peut concerner un service de communication et comporter des données permettant d'enrichir le procédé de sélection. Notamment, si la demande de ressources concerne un service vidéo, le terminal 10 pourra indiquer dans la requête qu'il s'agit d'un service vidéo ou bien indiquer dans la requête que le service est composé d'une fonction « vidéo » et d'une fonction « audio ». Le message de requête peut en outre comporter une information sur la localisation géographique du terminal 10 permettant le cas échéant à l'entité de gestion 90 de choisir la zone géographique dans laquelle est sélectionné le dispositif. Cette information peut être sous la forme d'une donnée de localisation géographique, par exemple des coordonnées GPS, ou bien sous forme de donnée de localisation topologique, en indiquant par exemple une adresse IP ou un réseau d'attachement.

A la réception d'une telle requête provenant du terminal 10, l'entité de gestion 90 procède à la sélection d'un dispositif pouvant effectivement assurer l'exécution des instructions. Pour cela, lors de l'étape E9, il analyse la demande de ressources émise par le terminal 10 en tenant compte s'il y en a, des informations complémentaires concernant le service de communication et/ou la localisation du terminal 10, et recherche parmi les dispositifs qu'il a considérés dans la zone géographique, et en fonction de leurs capacités, le dispositif qui convient le mieux aux besoins. Il se peut qu'aucun dispositif ne réponde au besoin auquel cas il en fera part au terminal 10. Une autre option consiste à indiquer au terminal 10 au moins deux dispositifs pouvant se répartir la charge d'exécution des instructions. L'entité de gestion 90, notamment s'il a des informations sur le service de communication pour lequel l'exécution d'instructions est demandée, peut décider de ne pas indiquer plus d'un dispositif au terminal 10 car il a déterminé qu'il n'est pas possible de répartir les instructions sur deux dispositifs. Dans le cas où il n'est pas capable de savoir si cela est possible ou non, il peut décider de renvoyer l'information sur les deux dispositifs au terminal, qui décidera ensuite de solliciter les deux dispositifs ou non. L'entité de gestion 90 indique au terminal ensuite le ou les dispositifs sélectionnés s'il en a retenu.

Lors de l'étape E10, l'entité de gestion 90 indique dans un message info le (ou les) dispositif(s) sélectionné(s). Ce message peut dans un mode de réalisation, intégrer une information de connectivité permettant au terminal de joindre le dispositif sélectionné. Le message « Info » peut contenir une information sur un seul dispositif, sur plusieurs dispositifs ou sur aucun dans le cas défavorable ou aucun dispositif ne dispose des ressources nécessaires. Une fois que le terminal 10 connaît le ou les dispositifs sélectionnés, il est en mesure de solliciter directement le/les dispositif(s) pour lui ou leur faire exécuter les instructions. Le terminal 10 peut communiquer avec le dispositif sélectionné en utilisant l'information de connectivité transmise par l'entité de gestion 90 lors de l'étape E10. Dans le cas où l'information de connectivité n'est pas présente, il utilise alors des moyens permettant de traduire l'information reçue sur le dispositif en information de connectivité par exemple en faisant appel à un service de résolution de noms, par exemple basé sur un DNS (*en anglais Domain Name Server*) ou d'un service de découverte automatique de services, par exemple basé sur le protocole SLP *(en anglais service Location Protocol*)*.*

La phase P4 de mise à jour est une phase qui peut intervenir à n'importe quel moment du procédé et intègre des étapes de mise à jour, soit de la zone géographique, soit des capacités des dispositifs. Le dispositif 13 indique par exemple un changement de capacité à l'entité de gestion 90 lors de l'étape E11, suite par exemple à un rechargement de la batterie. Le dispositif 14, lors de l'étape E12, envoie des nouvelles données liées à la zone géographique, par exemple suite à son déplacement, et est ajouté aux dispositifs de la zone par l'entité de gestion 90. Le dispositif 14, faisant désormais partie de la zone géographique, transmet ses capacités lors de l'étape E13 à l'entité de gestion 90. Le dispositif 11 envoie des nouvelles capacités, par exemple pour indiquer que sa batterie est très déchargée, à l'entité de gestion 90 lors de l'étape E14.

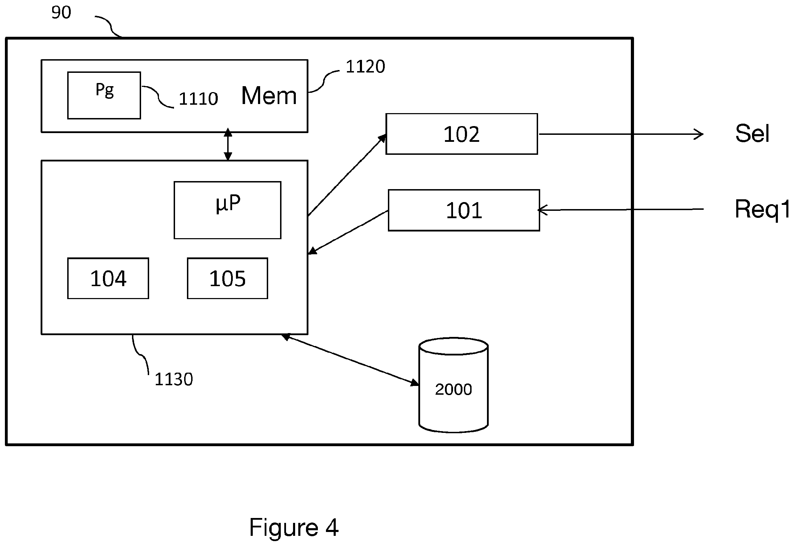

On se réfère maintenant à la **figure 4** qui représente une structure d'un équipement de sélection apte à mettre en œuvre le procédé de sélection selon un aspect de l'invention.

Par exemple, le dispositif 90 comprend une unité de traitement 130, équipée par exemple d'un microprocesseur µP, et pilotée par un programme d'ordinateur 110, stocké dans une mémoire 120 et mettant en œuvre le procédé de sélection selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 90 comprend les modules suivants:
- Un module d'obtention 105 d'une information relative à des capacités de dispositifs de la pluralité,
- Un récepteur 101 agencé pour recevoir un message de requête Req1 comprenant une demande de ressources pour la fourniture d'un service par le réseau,
- Un module de sélection 104 agencé pour sélectionner un dispositif parmi la pluralité en fonction de l'information et de la demande de ressources,
- Un émetteur 102 agencé pour émettre message de sélection Sel au terminal, comprenant un identifiant du dispositif sélectionné,
- Une base de données 2000 agencée pour enregistrer les demandes d'exécutions d'instructions des terminaux.

Optionnellement, dans un autre mode de réalisation, le récepteur 101 est également agencé pour recevoir une information relative à la localisation des dispositifs.

Les modules décrits en relation avec la figure 4 peuvent être des modules matériels ou logiciels.

L'invention n'est pas limitée aux exemples de réalisation ci-dessus décrits et représentés, à partir desquels on pourra prévoir d'autres modes et d'autres formes de réalisation, sans pour autant sortir du cadre de l'invention.

Le procédé de sélection est notamment également adapté à un environnement où les ressources sont virtualisées et les instructions sont à exécuter sur des instances virtualisées, elles-mêmes mises en œuvre sur des dispositifs physiques dont les ressources sont limitées. Selon le mode de réalisation, les informations transmises par les dispositifs peuvent être globales, c'est-à-dire liées à l'environnement matériel mais elles peuvent être également plus spécifiques et liées par exemple à une fonction virtualisée. Ainsi, les dispositifs peuvent indiquer que des ressources liées initialement à certaines fonctions virtualisées peuvent être cependant affectées à des instructions requises par un terminal. Il peut également indiquer qu'une fonction virtualisée ne peut être interrompue et donc réserver les ressources adéquates pour que cette fonction ne soit pas interrompue et utilisée par un terminal.

Le procédé de sélection permet de sélectionner des ressources pour exécuter des instructions mais aussi de mieux gérer les ressources énergétiques et faire en sorte que les ressources disponibles soient mieux utilisées. En effet, en sélectionnant des dispositifs ayant des ressources disponibles pour exécuter des instructions, on évite de recourir à des ressources extérieures ce qui a pour effet au final de mieux exploiter des ressources au sein de la zone géographique. Le procédé de sélection peut donc dans certains modes de déploiement être assimilé à un processus d'optimisation des capacités dans une zone géographique.

## Revendications

1. Procédé de sélection d'un dispositif, parmi une pluralité de dispositifs (11, 12, 13) autonomes en énergie connectés à un réseau d'accès d'un réseau de communication et situés dans une zone géographique déterminée (1), aptes à exécuter des instructions (Int1, Int2, Int3) relatives à la fourniture d'un service par le réseau, le procédé étant mis en œuvre par un équipement de gestion (90) comprenant les étapes suivantes :
- Obtention (E5, E6, E7) d'une information, comprenant une donnée sur des paramètres de consommation, relative à des capacités de dispositifs (11, 12, 13) de la pluralité,
- Réception (E8) d'un message de requête en provenance d'un terminal (10) connecté au réseau de communication, comprenant une demande de ressources pour l'exécution des dites instructions (Int1, Int2, Int3),
- Sélection (E9) d'au moins un dispositif parmi la pluralité en fonction de l'information et de la demande de ressources,
- Envoi (E10) d'un message de sélection au terminal (10), comprenant un identifiant de l'au moins un dispositif sélectionné.

2. Procédé de sélection selon la Revendication 1 où l'information relative à des capacités de dispositifs (11, 12, 13) comprend une donnée relative à la quantité d'énergie disponible.

3. Procédé de sélection selon la Revendication 1 où la demande de ressources inclut des paramètres définissant un service de communication.

4. Procédé de sélection selon la Revendication 1 où le message de requête comprend en outre une information relative à la localisation du terminal (10).

5. Procédé de sélection selon la Revendication 1 où au moins deux dispositifs (11, 12, 13) sont sélectionnés pour exécuter les instructions.

6. Procédé de sélection selon la Revendication 1 comportant en outre une étape d'obtention d'une information relative à la localisation des dispositifs (11, 12, 13) de la pluralité.

7. Procédé de distribution selon la Revendication 1 comportant en outre une étape de réception d'un message comprenant une information relative à des interfaces actives des dispositifs de la pluralité.

8. Procédé de sélection selon la Revendication 1 où le message de sélection comprend en outre une information relative à une connectivité du dispositif sélectionné.

9. Équipement de gestion (90), mettant en œuvre le procédé, décrit dans la première revendication, de sélection d'un dispositif (11, 12, 13) autonome en énergie, parmi une pluralité de dispositifs (11, 12, 13) connectés à un réseau d'accès d'un réseau de communication et situés dans une zone géographique déterminée, dans le but d'exécuter des instructions (Int1, Int2, Int3) relatives à la fourniture d'un service par le réseau comprenant :
- Un module d'obtention (105) d'une information, comprenant une donnée sur des paramètres de consommation, relative à des capacités de dispositifs de la pluralité,
- Un récepteur (101) agencé pour recevoir un message de requête en provenance d'un terminal connecté au réseau de communication, comprenant une demande de ressources pour l'exécution des dites instructions,
- Un module de sélection (104) agencé pour sélectionner au moins un dispositif parmi la pluralité en fonction de l'information et de la demande de ressources,
- Un émetteur (102) agencé pour émettre message de sélection au terminal, comprenant un identifiant de l'au moins un dispositif sélectionné,
- Une base de données (2000) agencée pour sauvegarder l'information.

10. Équipement de gestion, selon la revendication 9, où le récepteur est également agencé pour recevoir une information relative à la localisation des dispositifs de la pluralité.

11. Programme de sélection, **caractérisé en ce qu'**il comprend les instructions pour la mise en œuvre des étapes du procédé de sélection selon la revendication 1, lorsque ledit programme est exécuté par un processeur d'un équipement de gestion.

12. Support d'enregistrement lisible par un ordinateur comprenant des instructions qui, lorsqu'elles sont exécutées par un équipement de gestion, conduisent celui-ci à mettre en œuvre les étapes de la méthode selon la revendication 1.

## Patentansprüche

1. Verfahren zur Auswahl einer Vorrichtung aus mehreren energieautarken Vorrichtungen (11, 12, 13), die mit einem Zugangsnetz eines Kommunikationsnetzes verbunden sind und sich in einem bestimmten geografischen Gebiet (1) befinden, die dazu in der Lage sind, Anweisungen (Intl, Int2, Int3) für die Bereitstellung eines Dienstes über das Netz auszuführen, wobei das Verfahren, das durch eine Verwaltungseinrichtung (90) durchgeführt wird, die folgenden Schritte umfasst:
- Erhalten (E5, E6, E7) einer Information, die Daten über Verbrauchsparameter umfasst, über Kapazitäten von Vorrichtungen (11, 12, 13) der mehreren Vorrichtungen,
- Empfangen (E8) einer Anfragenachricht von einem Endgerät (10), das mit dem Kommunikationsnetz verbunden ist, umfassend eine Anforderung von Ressourcen für die Ausführung der Anweisungen (Intl, Int2, Int3),
- Auswählen (E9) mindestens einer Vorrichtung aus den mehreren Vorrichtungen in Abhängigkeit von der Information und von der Ressourcenanforderung,
- Senden (E10) einer Auswahlnachricht an das Endgerät (10), umfassend einen Identifikator der mindestens einen ausgewählten Vorrichtung.

2. Auswahlverfahren nach Anspruch 1, wobei die Information über Kapazitäten der Vorrichtungen (11, 12, 13) Daten über die verfügbare Energiemenge umfasst.

3. Auswahlverfahren nach Anspruch 1, wobei die Ressourcenanforderung Parameter umfasst, die einen Kommunikationsdienst definieren.

4. Auswahlverfahren nach Anspruch 1, wobei die Anfragenachricht ferner eine Information über den Standort des Endgeräts (10) umfasst.

5. Auswahlverfahren nach Anspruch 1, wobei mindestens zwei Vorrichtungen (11, 12, 13) zur Ausführung der Anweisungen ausgewählt werden.

6. Auswahlverfahren nach Anspruch 1, ferner umfassend einen Schritt des Erhaltens einer Information über den Standort der Vorrichtungen (11, 12, 13) der mehreren Vorrichtungen.

7. Verteilungsverfahren nach Anspruch 1, ferner umfassend einen Schritt des Empfangens einer Nachricht, die eine Information über aktive Schnittstellen der Vorrichtungen der mehreren Vorrichtungen umfasst.

8. Auswahlverfahren nach Anspruch 1, wobei die Auswahlnachricht ferner eine Information über eine Konnektivität der ausgewählten Vorrichtung umfasst.

9. Verwaltungseinrichtung (90), die das im ersten Anspruch beschriebene Verfahren zur Auswahl einer energieautarken Vorrichtung (11, 12, 13) aus mehreren Vorrichtungen (11, 12, 13), die mit einem Zugangsnetz eines Kommunikationsnetzes verbunden sind und sich in einem bestimmten geografischen Gebiet befinden, durchführt, mit dem Ziel, Anweisungen (Intl, Int2, Int3) für die Bereitstellung eines Dienstes über das Netz auszuführen, Folgendes umfassend:
- ein Modul zum Erhalten (105) einer Information, die Daten über Verbrauchsparameter umfasst, über Kapazitäten von Vorrichtungen der mehreren Vorrichtungen,
- einen Empfänger (101), der dazu eingerichtet ist, eine Anfragenachricht von einem Endgerät zu empfangen, das mit dem Kommunikationsnetz verbunden ist, umfassend eine Anforderung von Ressourcen für die Ausführung der Anweisungen,
- ein Auswahlmodul (104), das dazu eingerichtet ist, in Abhängigkeit von der Information und von der Ressourcenanforderung mindestens eine Vorrichtung aus den mehreren Vorrichtungen auszuwählen,
- einen Sender (102), der dazu eingerichtet ist, eine Auswahlnachricht an das Endgerät zu senden, umfassend einen Identifikator der mindestens einen ausgewählten Vorrichtung,
- eine Datenbank (2000), die dazu eingerichtet ist, die Information zu sichern.

10. Verwaltungseinrichtung nach Anspruch 9, wobei der Empfänger außerdem dazu eingerichtet ist, eine Information über den Standort der Vorrichtungen der mehreren Vorrichtungen zu empfangen.

11. Auswahlprogramm, **dadurch gekennzeichnet, dass** es die Anweisungen für die Durchführung der Schritte des Auswahlverfahrens nach Anspruch 1, wenn das Programm von einem Prozessor einer Verwaltungseinrichtung ausgeführt wird, umfasst.

12. Computerlesbares Speichermedium, das Anweisungen umfasst, die, wenn sie von einer Verwaltungseinrichtung ausgeführt werden, diese dazu veranlassen, die Schritte des Verfahrens nach Anspruch 1 durchzuführen.

## Claims

1. Method for selecting one device, from a plurality of devices (11, 12, 13) that are standalone with respect to power, that are connected to an access network of a communication network, that are located in a determined geographic region (1), and that are able to execute instructions (Intl, Int2, Int3) relative to the delivery of a service by the network, the method being implemented by a management equipment (90) and comprising the following steps:
- obtaining (E5, E6, E7) information, comprising a datum on consumption parameters, relative to capacities of devices (11, 12, 13) of the plurality,
- receiving (E8) a request message from a terminal (10) connected to the communication network, comprising a request for resources to execute said instructions (Intl, Int2, Int3),
- selecting (E9) at least one device from the plurality depending on the information and on the request for resources,
- dispatching (E10) a selection message to the terminal (10), comprising an identifier of the at least one selected device.

2. Selecting method according to Claim 1, wherein the information relative to capacities of devices (11, 12, 13) comprises a datum relative to the available amount of power.

3. Selecting method according to Claim 1, wherein the request for resources includes parameters defining a communication service.

4. Selecting method according to Claim 1, wherein the request message further comprises information relative to the location of the terminal (10).

5. Selecting method according to Claim 1, wherein at least two devices (11, 12, 13) are selected to execute the instructions.

6. Selecting method according to Claim 1, further comprising a step of obtaining information relative to the location of the devices (11, 12, 13) of the plurality.

7. Distributing method according to Claim 1, further comprising a step of receiving a message comprising information relative to active interfaces of the devices of the plurality.

8. Selecting method according to Claim 1, wherein the selecting message further comprises information relative to a connectivity of the selected device.

9. Managing equipment (90), implementing the method, described in the first claim, for selecting a device (11, 12, 13) that is standalone with respect to power, from a plurality of devices (11, 12, 13) that are connected to an access network of a communication network and that are located in a determined geographic region, with the aim of executing instructions (Intl, Int2, Int3) relative to the provision of a service by the network, comprising:
- a module (105) for obtaining information, comprising a datum on consumption parameters, relative to capacities of devices of the plurality,
- a receiver (101) arranged to receive a request message from a terminal connected to the communication network, comprising a request for resources to execute said instructions,
- a selecting module (104) arranged to select at least one device from the plurality depending on the information and on the request for resources,
- a sender (102) arranged to send a selection message to the terminal, comprising an identifier of the at least one selected device,
- a database (2000) arranged to save the information.

10. Managing equipment, according to Claim 9, wherein the receiver is also arranged to receive information relative to the location of the devices of the plurality.

11. Selecting program, **characterized in that** it comprises instructions for implementing steps of the selecting method according to Claim 1, when said program is executed by a processor of a managing equipment.

12. Storage medium that is readable by a computer comprising instructions that, when they are executed by a managing equipment, lead the latter to implement the steps of the method according to Claim 1.
